(19) Europäisches Patentamt
European Patent Office
Office européen des brevets

(11) EP 1 656 021 B1

(12) # EUROPÄISCHE PATENTSCHRIFT

(45) Veröffentlichungstag und Bekanntmachung des Hinweises auf die Patenterteilung:
**24.04.2013 Patentblatt 2013/17**

(21) Anmeldenummer: **04763249.2**

(22) Anmeldetag: **15.07.2004**

(51) Int Cl.:
***A01N 43/56*** *(2006.01)* ***A01N 43/10*** *(2006.01)*
***A01N 43/42*** *(2006.01)* ***A01N 43/36*** *(2006.01)*
***A01N 43/80*** *(2006.01)* ***A01P 13/00*** *(2006.01)*
***A01N 25/28*** *(2006.01)*

(86) Internationale Anmeldenummer:
**PCT/EP2004/007875**

(87) Internationale Veröffentlichungsnummer:
**WO 2005/015999 (24.02.2005 Gazette 2005/08)**

(54) **LAGERSTABILE HERBIZIDE MISCHUNGEN MIT METAZACHLOR**

STORAGE-STABLE HERBICIDAL MIXTURES WITH METAZACHLOR

MÉLANGES HERBICIDES STABLES AU STOCKAGE CONTENANT DU MÉTAZACHLORE

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **11.08.2003 DE 10337162**

(43) Veröffentlichungstag der Anmeldung:
**17.05.2006 Patentblatt 2006/20**

(73) Patentinhaber: **BASF SE**
**67056 Ludwigshafen (DE)**

(72) Erfinder:
- **KOBER, Reiner**
**67136 Fussgönheim (DE)**
- **MAYER, Winfried**
**55270 Bubenheim (DE)**
- **BRATZ, Matthias**
**67133 Maxdorf (DE)**

(56) Entgegenhaltungen:
**WO-A-00/10392 WO-A-98/24317**

- **H.B. SCHER, M. RODSON & K.-S. LEE: "Microencapsulation of pesticide by interfacial polymerization utilizing isocyanate or aminoplast chemistry" PESTICIDE SCIENCE, Bd. 54, 1998, Seiten 394-400, XP002300398**
- **DATABASE BIOSIS [Online] BIOSCIENCES INFORMATION SERVICE, PHILADELPHIA, PA, US; 1996, NUYKEN W ET AL: "BAS 632 00 H: A new herbicide-combination for weed control in oilseed winterrape" XP002300399 Database accession no. PREV199799764931 & [COMMUNICATIONS FROM THE FEDERAL BIOLOGICAL INSTITUTE FOR AGRICULTURE AND FORESTRY BERLIN-DAHLEM] BIOLOGISCHE BUNDESANSTALT FUER LAND- UND FORSTWIRTSCHAFT {A}, KOENIGIN-LUISE-STRASSE 19, D-1000 BERLIN-DAHLEM, GERMANY SERIES : MITTEILUNGEN AUS DER BIO, 1996, Seite 61, 50TH GERMAN MEETING ON PLANT PROTECTION; MUENSTER, GERMANY; SEPTEMBER 23-26, 1996 ISSN: 3-8263-3126-5**
- **DATABASE BIOSIS [Online] BIOSCIENCES INFORMATION SERVICE, PHILADELPHIA, PA, US; 1993, JENNRICH H ET AL: "BAS 526 .. H, a new combination for flexible weed control in oil seed rape" XP002300400 Database accession no. PREV199497288368 & MEDEDELINGEN FACULTEIT LANDBOUWKUNDIGE EN TOEGEPASTE BIOLOGISCHE WETENSCHAPPEN UNIVERSITEIT GENT, Bd. 58, Nr. 3A, 1993, Seiten 853-861,**
- **K. ADAMCZEWSKI ET AL: "A biological evaluation of the new Command CS formulation in Poland", ZEITSCHRIFT FÜR PFLANZENKRANKHEITEN UND PFLANZENSCHUTZ, vol. XVII, 2000, pages 671-676, Stuttgart**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- **H. Niessen: "Formulierungshilfsmittel" In: K.H. Büchel: "Pflanzenschutz und Schädlingsbekämpfung", 1977, Georg Thieme Verlag, Stuttgart**

Bemerkungen:

Die Akte enthält technische Angaben, die nach dem Eingang der Anmeldung eingereicht wurden und die nicht in dieser Patentschrift enthalten sind.

## Beschreibung

Die vorliegende Beschreibung betrifft Mischungen aus Pflanzenschutzmitteln enthaltend als Wirkstoffe eine Kombination von nicht mikroverkapseltem Metazachlor, mikroverkapseltem Dimethenamid und gegebenenfalls nicht mikroverkapseltem Quinmerac und/oder nicht mikroverkapseltem oder mikroverkapseltem Clomazone;

Formulierungen enthaltend

A) Mischungen wie in den Ansprüchen definiert und
B) Zusatzstoffe;

die Verwendung von Mischungen und/oder Formulierungen wie in den Ansprüchen definiert zur Bekämpfung von unerwünschtem Pflanzenwuchs und ein Verfahren zur Herstellung der Mischungen oder der Formulierungen wie in den Ansprüchen definiert durch Mischen der Komponenten und gegebenenfalls anschließende weitere Bearbeitung.

Metazachlor ist ein herbizider Wirkstoff, der im allgemeinen in Raps- und Gemüsekulturen eingesetzt wird. Unter Metazachlor wird im folgenden 2-Chlor-(2',6'-dimethyl-N-pyrazol-1-yl-methyl)-acetanilid in allen seinen Kristallmodifikationen verstanden, wobei das in EP 0 411 408 A (BASF Aktiengesellschaft) beschriebene monokline Metazachlor ausdrücklich mitumfasst ist.

Es ist allerdings wünschenswert die spezifische Wirkung des Metazachlors und/oder die Wirkungssicherheit weiter zu verbessern sowie das Anwendungsspektrum des Metazachlors hinsichtlich Unkräuter zu verbreitern ohne dabei die Zielnutzpflanze zu schädigen.

Eine Möglichkeit dieses Ziel zu erreichen ist Metazachlor mit weiteren Herbiziden zu kombinieren, wobei es, auch wegen der großen Zahl der angebotenen Herbizide, praktisch unmöglich ist gut geeignete Kombinationen vorherzusagen.

Metazachlor neigt in Suspension, z.B. in SC-Formulierungen, zur Kristallreifung oder Ostwald-Reifung. Kristallreifung, Ostwaldreifung oder andere Phänomene, die zu Kristallwachstum oder allgemein zu einer Separierung (z.B. Ausflockung, Sedimentierung) des Wirkstoffes aus der flüssigen Suspension, beispielsweise einer SC-Formulierung, führen sind in der landwirtschaftlichen Praxis sehr unerwünscht.

Die so gebildeten groben Wirkstoffteilchen können bei der Ausbringung der Wirkstoffsuspension zu Düsenverstopfungen der Spritzdüsen führen, oder es bilden sich, beispielsweise in Fertigformulierungen, Bodensätze die nicht mehr gut homogenisierbar oder aufschüttelbar sind und zum Beispiel beim Dosieren einer SC-Formulierung zu Problemen führen können. Ferner führen grobe Wirkstoffteilchen bei der Applikation des Wirkstoffs im allgemeinen zu einer schlechteren Wirkstoffverteilung auf dem Boden oder dem Blatt und damit zu einer geringeren biologischen Wirkung.

Die oben geschilderten Nachteile verstärken sich im allgemeinen mit der Zeit und/oder unter erhöhten Temperaturen, beispielsweise bei der Lagerung der Wirkstoffsuspension in warmen Klimata.

Zur Erhöhung der Lagerstabilität schlägt DE 44 36 293 A (BASF Aktiengesellschaft) eine flüssige, wässrige Mischung vor, die neben dem Wirkstoff Metazachlor unter anderem ein bestimmtes Copolymer enthält.

Die Lagerstabilität dieser Mischung ist aber noch verbesserungsfähig, vor allem wenn weitere, flüssige und nicht-wasserverdünnbare Wirkstoffe, z.B. zur Herstellung einer Suspoemulsion, zugesetzt werden sollen. Suspoemulsionen sind im allgemeinen Dreiphasensysteme aus Wasser, einer emulgierten Ölphase und einer mikropartikulären Feststoffphase.

WO 96/14743 A (FMC Corporation) beschreibt Formulierungen von mikroverkapseltem Clomazone. Berichteter Vorteil dieser Formulierung ist die reduzierte Verdampfbarkeit ("volatility") des Clomazones.

WO 00/10392 A (FMC Corporation) beschreibt ein bestimmtes Verfahren, welches zu wässrigen Suspensionen führt, die

a) mikroverkapseltes Clomazone und nicht-verkapselte weitere Pflanzenschutzmittel enthalten oder b) Mikrokapseln enthalten, die Clomazone und ein weiteres Pflanzenschutzmittel gemeinsam enthalten.

Es werden weder Metazachlor, Dimethenamid, Quinmerac oder Flurochloridone noch eine erhöhte Lagerstabilität der Suspension offenbart.

K. Adamczewski et al., "A biological evaluation of the new Command CS formulation in Poland", Zeitschrift für Pflanzenkrankheiten und Pflanzenschutz, Sonderheft XVII, 2000, Seiten 671-676, Tabellen 2 und 3, jeweils Treatment 4 beschreiben Tankmischungen der Handelsprodukte Command® 360 CS (mit mikroverkapseltem Clomazone) und Butisan®400 SC (mit 400 g/l Metazachlor).

Der vorliegenden Erfindung lag die Aufgabe zugrunde, Mischungen aus Pflanzenschutzmitteln gemäß Anspruch 1 zu entwickeln, welche eine Breitbandwirkung gegen Unkräuter haben und welche, vor allem in Form von Suspoemulsionen, auch bei erhöhten Temperaturen lagerstabil sind.

Demgemäß wurden die Mischungen, die Formulierungen, die Verwendung und das Verfahren gemäß den

Ansprüchen gefunden.

Erfindungsgemäß liegt Metazachlor (2-Chlor-(2',6'-dimethyl-N-pyrazol-1-yl-methyl)-acetanilid) in allen seinen Kristallmodifikationen, vorzugsweise in der triklinen oder der in EP 0 411 408 A (BASF Aktiengesellschaft) beschrieben monoklinen Kristallmodifikation vor.

Metazachlor ist bekannt, siehe z.B. The Pesticide Manual 12th Edition; British Crop Protection Council, Editor: C.D.S. Tomlin, 2000, Seiten 508/509.

Erfindungsgemäße Wirkstoffe sind Dimethenamid (The Pesticide Manual 12th Edition; British Crop Protection Council, Editor: C.D.S. Tomlin, 2000, Seiten 305/306) als Racemat oder als S-Isomeres (Dimethenamid-P), Quinmerac (The Pesticide Manual 12th Edition; British Crop Protection Council, Editor: C.D.S. Tomlin, 2000, Seiten 817) oder Clomazone (The Pesticide Manual 12th Edition; British Crop Protection Council, Editor: C.D.S. Tomlin, 2000, Seiten 190/191).

Die erfindungsgemäßen Wirkstoffe umfassen selbstverständlich die entsprechenden Salze sowie, falls die Wirkstoffe Carboxylgruppen haben, die entsprechenden Derivate, wie Ester oder Amide.

Zumindest Dimethenamid liegt in den erfindungsgemäßen Mischungen mikroverkapselt vor.

Die Mikroverkapselung von Pflanzenschutzwirkstoffen im allgemeinen ist gut bekannt, (Arshady, R. (ed.): Microspheres, Microcasules & Liposomes, Volume 1: Preparation and Chemical Applications; The MML Series, Citus Books, London, 1999 (ISBN 0 9532 187 16).

"Mikroverkapselt" oder "Mikrokapsel" bedeutet im Folgenden, ein verkapseltes Partikel welches nicht mehr als 1000 $\mu$m, vorzugsweise von 0,0001 bis 20 $\mu$m groß ist.

Üblicherweise besteht dieses Partikel aus einer polymeren Hülle und dem davon eingeschlossenen Inhaltsstoff. Üblicherweise ist die polymere Hülle porös.

Geeignete, die Hülle bildende Polymere sind solche, welchen als Monomere bifunktionelle Isocyanate in Kombination mit Di- und/oder Oligoaminen, vorzugsweise $\alpha$-$\omega$-Alkylidendiaminen, zugrunde liegen, also Polyharnstoffe. Weiterhin sind geeignete die Hülle bildende Polymere Polymethylmethacrylate und Melaminformaldehydharze.

Der wesentliche Bestandteil des eingeschlossenen Inhaltstoffes der Mikrokapseln ist der Wirkstoff Dimethenamid.

Hierbei kann nur Dimethenamid, oder Dimethenamid und ggf. Clomazone mikroverkapselt vorliegen.

Erfindungsgemäße Mischungen sind in den Tabellen 1, 2 und 3 zusammengestellt.

Darin bedeutet: CS = mikroverkapselt, Non = nicht mikroverkapselt, MTZ = Metazachlor (alle Isomeren oder Isomerenmischungen, vorzugsweise jedoch triklin oder monoklin), DMTA = Dimethenamid (alle Isomeren oder Isomerenmischungen, vorzugsweise jedoch Dimethenamid-P), QUIN = Quinmerac, CLOM = Clomazone.

Tabelle 1:

| |
|---|
| MTZ-Non + DMTA-CS |

Tabelle 2:

| |
|---|
| MTZ-Non + DMTA-CS + QUI+N-Non |
| MTZ-Non + DMTA-CS + CLOM-Non |
| MTZ-Non + DMTA-CS + CLOM-CS |

Tabelle 3:

| |
|---|
| MTZ-Non + DMTA-CS + QUIN-Non + CLOM-Non |
| MTZ-Non + DMTA-CS + QUIN-Non + CLOM-CS |

Die durch "CS" gekennzeichneten Wirkstoffe in der jeweiligen Kombination (Mischung pro Zeile) in Tabellen 1, 2 oder 3 können a) jeder für sich mikroverkapselt sein, oder b) alle gemeinsam in einer Mikrokapsel vorliegen.

Ganz besonders bevorzugt sind folgende Kombinationen:

Tabelle 4

| |
|---|
| MTZ-Non + DMTA-CS |
| MTZ-Non + DMTA-CS + QUIN-Non |

Das Metazachlor kann in den erfindungsgemäßen Mischungen vollständig in einer nicht-monoklinen, z.B. der

triklinen, Modifikation, teilweise in einer nicht-monoklinen, z.B. der triklinen, Modifikation und teilweise in der monoklinen Modifikation oder vollständig in der monoklinen Modifikation vorliegen. Vorzugsweise liegt das Metazachlor in der monoklinen Modifikation vor.

Die erfindungsgemäßen Mischungen können wie folgt hergestellt werden:

A) Die bereits mikroverkapselte Komponente wird mit der nicht mikroverkapselten Komponente, bevorzugt als SC-Konzentrat, gemischt vorzugsweise zu den Mischungen gemäß Tabellen 1, 2, 3 oder 4;
oder

B) die Wirkstoffe werden in beliebiger Auswahl gemeinsam vorgelegt, z.B. dispergiert oder emulgiert, und mikroverkapselt, vorzugsweise zu den entsprechenden Mischungen der Tabellen 1 oder 2.

Weitere gut geeignete Mikroverkapselungsverfahren sind in WO 00/10392 A (FMC Corporation) offenbart.

Die erfindungsgemäßen Mischungen können bereits zur Verwendung fertig gemischt vorliegen, oder sie können erst durch Kombination der Einzelkomponenten (z.B. als Tankmix) gebildet werden. Die erfindungsgemäßen Mischungen umfassen also alle genannten Kombinationen der oben genannten Komponenten, egal wann, wo und wie diese vorliegen oder entstehen.

Die erfindungsgemäßen Mischungen, vorzugsweise die in den Tabellen 1, 2 oder 3 genannten Mischungen, insbesondere die in Tabelle 4 genannten Mischungen, können Bestandteil von Formulierungen sein. Pflanzenschutz-Formulierungen sind dem Fachmann bekannt. Sie enthalten üblicherweise neben den Wirkstoffen Zusatzstoffe B). Die Zusatzstoffe sind dem Fachmann bekannt.

Bevorzugte Zusatzstoffe B) sind

a) <u>anionische Tenside in Konzentrationen von 1 - 300 g/l-Formulierung, vorzugsweie 5 - 70 g/l-Formulierung.</u>
Geeignete ionische Tenside sind beispielsweise Alkylarylsulfonate, Phenylsulfonate, Alkylsulfate, Alkylsulfonate, Alkylethersulfate, Alkylarylethersulfate, Alkylpolyglykoletherphosphate, Polyarylphenyletherphosphate, Alkylsulfosuccinate, Olefinsulfonate, Paraffinsulfonate, Petroleumsulfonate, Tauride, Sarkoside, Fettsäuren, Alkylnaphthalinsulfonsäuren, Naphthalinsulfonsäuren, Ligninsulfonsäuren, Kondensationsprodukte sulfonierter Naphthaline mit Formaldehyd oder mit Formaldehyd und Phenol und gegebenfalls Harnstoff, Lignin-Sulfit-Ablauge, einschließlich ihrer Alkali-, Erdalkali-, Ammonium- und Amin-Salze, Alkylphosphate, quartäre Ammoniumverbindungen, Alkylphosphate, Aminoxide, Betaine und deren Gemische.
Bevorzugt sind Kondensationsprodukte sulfonierter Naphthaline oder Phenole mit Formaldehyd und gegebenfalls Harnstoff, die als wasserlösliche Salze vorliegen.
Bevorzugte Kondensationsprodukte und ihre Konzentrationen sind 1-10 Gew.-%, bevorzugt 2-8 Gew.-%, besonders bevorzugt 3-6 Gew.-% eines anionischen oligomeren bzw. polymeren Dispergiermittels der Formel Ia und/oder Ib

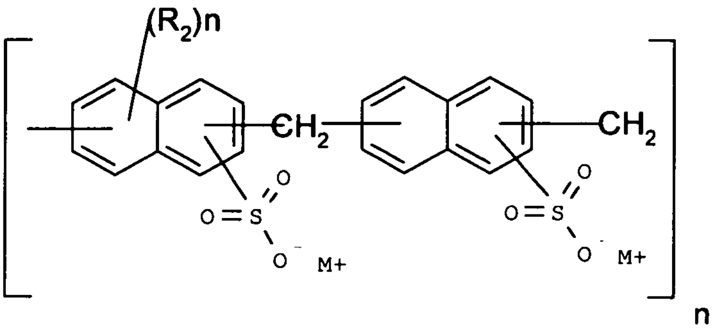

Ia

aber besonders bevorzugt der Formel Ib,

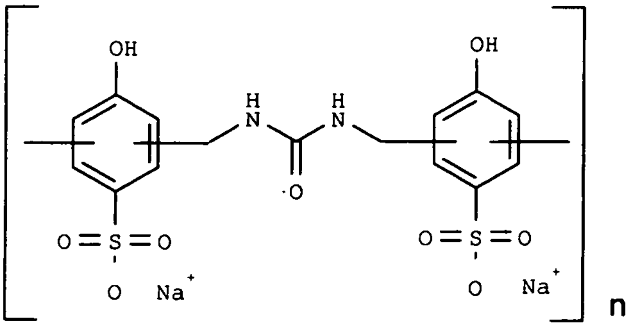

Ib

Ib wird beschrieben als ein Kondensationsprodukt aus Phenol-sulfonsäure und Natronlauge mit Formaldehyd und Harnstoff, mit der Bedeutungen der Parameter bei Formel Ia und Ib wie folgt:

$$n = 100\text{-}10^{10}$$

$M^+$, ein Kation der Alkali- und Erdalkalireihe, wie Natrium, Kalium, Calcium, Magnesium oder Kupfer,
n bei $R_2$ bedeutend 0-3, bevorzugt 1-2,
mit der Bedeutung für $R_2$, $C_1$-$C_8$-n-Alkyl, $C_3$-$C_8$-i-Alkyl, oder $C_4$-$C_8$-tert.-Alkyl, wie Methyl, Ethyl oder Butyl, i-Butyl, tert.-Butyl.

b) <u>ein nichtionisches Tensid mit einer Konzentration von 1 - 300 g/l-Formulierung vorzugsweise 5 - 70 g/l-Formulierung.</u>
Geeignete nichtionische Tenside sind beispielsweise Alkylphenolalkoxylate, Alkoholalkoxylate, Fettaminalkoxylate, Polyoxyethylenglycerolfettsäureester, Rizinusölalkoxylate, Fettsäurealkoxylate, Fettsäureamidalkoxylate, Fettsäurepolydiethanolamide, Lanolinethoxylate, Fettsäurepolyglykolester, Isotridecylalkohol, Fettsäureamide, Methylcellulose, Fettsäureester, Silicon-Öle, Alkylpolyglykoside, Glycerolfettsäureester, Polyethylenglykol, Polypropylenglykol, Polyethylenglykolpolypropylenglykol-Block-copolymere, Polyethylenglykolalkylether, Polypropylenglykolalkylether, Polyethylenglykolpolypropylenglykolether-Blockcopolymere und deren Gemische, Polyacrylate, Acrylsäurepfropfcopolymere.
Bevorzugt sind Polyethylenglykol, Polyproylenglykol, Polyethylenglykolpolypropylenglykol-Blockcopolymere, Polyethylenglykolalkylether, Polypropylenglykolalkylether, Polyethylenglykolpolyproylenglykolether-Blockcopolymere und deren Gemische.
Ferner kommen als Polymere in Betracht:

- Di-Tri- und Multi-Blockpolymere vom Typ (AB)x-, ABA und BAB, z.B. Polyethylenoxid-block-polypropylenoxid, auch Polystyrol-blockpolyethylenoxid oder auch AB-Kammpolymere, z.B. Polymeth/acrylat-combpolyethylenoxid.

Gut geeignet sind auch Gemische aus a) und b).
Bevorzugte Gemische von ionischen und nichtionischen Tensiden sind Kondensationsprodukte sulfonierter Phenole mit Harnstoff und Formaldehyd sowie Polyethylenglykolpolypropylenglykolether-Blockcopolymere.

c) Weitere Hilfsmittel
Geeignete thioxotrope Additive c) sind Verbindungen, die der Formulierung ein pseudoplastisches Fließverhalten verleihen, d. h. hohe Viskosität im Ruhezustand und niedrige Viskosität im bewegten Zustand.
Geeignete Verbindungen sind beispielsweise Polysaccharide wie Xanthan Gum, Kelzan der Fa. Kelco oder Rhodopol 23 (Rhone Poulenc).
Das thioxotrope Additiv c) wird im allgemeinen in der wäßrigen Formulierung in einer Konzentration von 0,01 bis 5 Gew.-%, bevorzugt von 0,05 bis 3 Gew.-%, besonders bevorzugt von 0,1 bis 2 Gew.-%, bezogen auf die gesamte wäßrige Formulierung, eingesetzt.
Als sogenannte Verdickungsmittel können die Formulierungen des weiteren mineralische Bestandteile wie z.B. Bentonite, Talicite oder Hektorite enthalten, wodurch sich allgemein die physikalischen Eigenschaften der Formulierungen hinsichtlich geringerer Serumbildung oder geringerer Sedimentation verbessern. Ferner können sie auch

meist in Folge von Viskositätserhöhungen chemische Prozesse in der Formulierungen bei der Lagerung unterdrükken, was zu verbesserter Wirkstoff-Stabilität führen kann. Als organische Verdickungsmittel kommen ferner z. B. Rizinusöl-Derivate in Betracht.
Als Antischaummittel kommen beispielsweise Silikonemulsionen, langkettige Alkohole, Fettsäuren, fluororganische Verbindungen und deren Gemische in Betracht.
Bakterizide können zur Stabilisierung der wäßrigen Fungizid-Formulierung zugesetzt werden. Geeignete Bakterizide sind beispielsweise Proxel (Fa. ICI) Nipacide BIT 20 (Fa. Thor Chemie), Kathon MK, Acticide (Rhom & Haas). Besonders geeignet sind häufig Mischungen der Tenside.
Ferner kommen in Betracht

d) Copolymere gemäß o. g. DE 44 36 293 A und/oder vorteilhaft, Elektrolyte, wie Metall- oder Ammoniumsalze (z.B. Chloride, Sulfate, Nitrate, Phosphate) oder Harnstoff als Zusatzstoffkomponente.

Die genannten Hilfsmittel B) können vor oder nach der Vermahlung der SC-Vorkonzentrate dem Formulieransatz zugegeben werden.
Die erfindungsgemäßen Formulierungen enthalten in der Regel Gemische, ausgewählt aus den Komponenten a) bis d).
Ein gut geeignetes Verfahren zur Herstellung der erfindungsgemäßen Formulierungen ist in den Beispielen erläutert.
Die erfindungsgemäßen Formulierungen enthalten vorzugsweise in der Regel 10 bis 50 Gew.-%, vorzugsweise 15 bis 30 Gew.-% nicht mikroverkapseltes Metazachlor in Form eines wässrigen Suspensionskonzentrates, 1 bis 25 Gew.-%, vorzugsweise 2 bis 15 Gew.-% mikroverkapseltes Dimethenamid, 10 bis 70 Gew.-%, vorzugsweise 35 bis 60 Gew.-% Wasser sowie 2 bis 20 Gew.-%, vorzugsweise 5 bis 15 Gew.-% oberflächenaktive Hilfsmittel.
Die erfindungsgemäßen Formulierungen können noch 5 bis 40 Gew.-% organischer Flüssigkeiten, vorzugsweise Alkohole, Ester, aliphatische, aromatische Kohlenwasserstoffe enthalten. Gut geeignete derartige Flüssigkeiten sind Paraffinöle, $C_1$-$C_{10}$-alkyliertes Benzol und/oder Naphthalin sowie technische oder naturstoffbasierte Öle, Ester, Dioder Triglyceride.
Im allgemeinen kommen diese organischen Flüssigkeiten bei der Mikroverkapselung des Wirkstoffs zur Anwendung.
Die spritzfähigen Brühen enthalten normalerweise 0,0001 bis 10 Gew.%, vorzugsweise 0,001 bis 1 Gew.-% und insbesondere 0,01 bis 0,5 Gew,-% Wirkstoff, bezogen auf den einzelnen reinen Wirkstoff a) bis c). In der Regel enthalten die spritzfähigen Brühen 0,001 bis 50 Gew.-%, vorzugsweise 0,01 bis 5 Gew.-% und insbesondere 0,25 bis 2 Gew.-% der erfindungsgemäßen Mischung.
Die erfindungsgemäßen Formulierungen können in getrennter Form vorliegen, so dass sie, z.B. zur Herstellung einer Tankmischung (Tankmix) noch miteinander gemischt werden müssen, oder sie können komplett gemischt in einer Fertigformulierung bereit zur Verwendung vorliegen. Die einzelnen Komponenten der erfindungsgemäßen Formulierung können separat verpackt, die erfindungsgemäße Formulierung kann aber auch in einer Verpackung gebrauchsfertig vorliegen.
Zur Verwendung als Pflanzenschutzmittel werden die erfindungsgemäßen Mischungen - vorzugsweise die erfindungsgemäßen Formulierungen - durch Kombination/Mischen der Komponenten oder bereits als Fertigmischung oder Fertigformulierung vorliegend, üblicherweise mit Wasser verdünnt (Tankmix, Spritzbrühe) und dann auf bekannte Art und Weise, vorzugsweise durch Versprühen, vorzugsweise zur Bekämpfung unerwünschten Pflanzenwuchses ausgebracht.
Die Arbeitstechniken und erforderlichen Geräte sind dem Fachmann bekannt.
Ein Vorteil der erfindungsgemäßen Mischungen und der erfindungsgemäßen Formulierungen ist, dass diese chemisch und physikalisch lagerstabil sind und praktisch nicht die Düsen des Spritzwerkzeuges verstopfen und sich bei der Zubereitung der Spritzbrühe, z.B. eines Tankmix, gut abmessen (kein sedimentierter Wirkstoff) und dosieren lassen.
Die erfindungsgemäßen Mischungen und erfindungsgemäßen Formulierungen werden im allgemeinen zur Bekämpfung unerwünschten Pflanzenwuchses in den üblichen Kulturpflanzen üblicherweise im Vorauflauf- oder Nachauflaufverfahren eingesetzt.
Neben natürlichem Raps, als ausgewählte bevorzugte Kulturpflanze, können die erfindungs-gemäßen Mischungen oder Formulierungen auch für Kulturpflanzen eingesetzt werden, die z. B. durch gentechnische oder züchterische Maßnahme gegenüber den erfindungsgemäßen Mischungen oder Formulierungen tolerant sind, d. h. eine ausreichende Selektivität im Vor- und/oder Nachauflaufverfahren aufweisen.
In Betracht kommen beispielsweise, besonders in Bezug auf tolerante Kulturen, folgende Kulturen:
Allium cepa, Ananas comosus, Arachis hypogaea, Asparagus officinalis, Beta vulgaris spp. altissima, Beta vulgaris spp. rapa, Brassica napus var. napus, Brassica napus var. napobrassica, Brassica rapa var. silvestris, Cemellia sinensis, Carthamus tinctorius, Carya illinoinensis, Citrus limon, Citrus sinensis, Coffea arabica (Coffea canephora,

Coffea liberica), Cucumis sativus, Cynodon dactylon, Daucus carota, Elaeis guineensis, Fragaria vesca, Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spp., Manihot esculenta, Medicago sativa, Musa spp., Nicotiana tabacum (N. rustica), Olea europaea, Phaseolus lunatus, Phaseolus vulgaris, Picea abies, Pinus spp., Pisum sativum, Prunus avium, Prunus persica, Pyrus communis, Ribes sylestre, Ricinus communis, Saccharum officinarum, Secale cereale, Solanum tuberosum, Sorghum bicolor (s. vulgare), Theobroma cacao, Trifolium pratense, Triticum durum, Vicia faba, Vitis vinifera.

Unerwünschte Pflanzen sind beispielsweise: Hühnerhirse (Echinochloa crus-galli), Brachiaria plantaginea, Ischaemum rugosum, Leptochloa dubia, Zurückgekrümmter Fuchsschwanz (Amaranthus retroflexus), Weißer Gänsefuß (Chenopodium album), Klebkraut (Galium aparine), Schwarzer Nachtschatten (Solanum nigrum), Ackerfuchsschwanz (Alopecurus myosuroides), Wind-Hafer (Avena fatua), Wehrlose Trespe (Bromus inermis), Einjähriges Rispengras (Poa annua), Borstenhirse (Setaria faberii), (Ausfall-)Weizen (Triticum aestivum), (Ausfall-)Mais (Zea mays).

Die Applikation der erfindungsgemäßen Mischungen oder Formulierungen kann im Vorauflauf- oder im Nachauflaufverfahren erfolgen. Sind die Wirkstoffe für gewisse Kulturpflanzen weniger verträglich, so können Ausbringungstechniken angewandt werden, bei welchen die erfindungsgemäßen Mischungen oder Formulierungen mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Außerdem kann es von Nutzen sein, die erfindungsgemäßen Mischungen oder Formulierungen allein oder gemeinsam mit weiteren Pflanzenschutzmitteln auszubringen, beispielsweise mit Mitteln zur Bekämpfung von Schädlingen oder phytopathogenen Pilzen bzw. Bakterien. Interessant ist ferner das Zumischen von Mineralsalzlösungen, welche zur Behebung von Ernährungs- und Spurenelementmängeln eingesetzt werden. Es können, wie o. g. auch nichtphytotoxische Öle und Ölkonzentrate zugesetzt werden.

Die Aufwandmengen an dem herbiziden Wirkstoff betragen, je nach Bekämpfungsziel, Jahreszeit, Zielpflanzen und Wachstumsstadium in der Regel 50 bis 1500 g/ha, vorzugsweise 200 bis 1200 g/ha Wirkstoff.

Beispiele

Herstellung einer erfindungsgemäßen Mischung

Die Herstellung einer erfindungsgemäßen Formulierung kann nach an sich bekannten Methoden durch Abmischen der jeweiligen Komponenten, ggf. unter Erwärmen, durch Dispergieren und/oder Vermahlen erfolgen.

Zum Beispiel wird zunächst ein Suspensionskonzentrat von Metazachlor hergestellt, indem dieser Wirkstoff mit Hilfsmittel vermahlen wird.

In einem separaten Schritt wird desweiteren der flüssige Wirkstoff mikroverkapselt und anschließend werden beide Vorkonzentrate abgemischt.

Die nachfolgenden Ausführungen erläutern dies im Detail an ausgewählten Beispielen.

Allgemeine Herstellung von Metazachlor-SC-Formulierungen bzw. SC-Vorkonzentraten, insbesondere von Metazachlor-Vorkonzentraten

Allgemeine Versuchsbeschreibung 1

In an sich bekannter Weise wird Metazachlor und ggf. ein weiterer Co-Wirkstoff, wie z. B. Quinmerac, mit Netz- und Dispergiermitteln vorzugsweise in Kugelmühlen oder Rührwerkskugelmühlen allgemein bei ca. 0 - 30 °C mit Mahlkörpern, beispielsweise Glasmahlkörpern oder anderen mineralischen oder metallischen Mahlkörpern in einer Größe von 0,1 - 30 mm, vorzugsweise 0,6 - 2 mm zerkleinert, bis die mittlere Partikelgröße deutlich kleiner als 10 $\mu$m und zum Beispiel im Bereich von 1 bis 10 $\mu$m liegt. Die Wirkstoffkonzentration beträgt ca. 10-60 Gew.-%, allgemein 30-60 Gew.-%.

Die Mahlungen erfolgen z. B. in einer Dynomühle der Fa. Bachofen mit einer Ansatzgröße von 0,5 bis zu einem Liter in sogenannter Passagenfahrweise. Nach in der Regel 5 Passagen (Durchpumpen des Slurries durch die Mühle mit Hilfe einer Schlauchpumpe) werden dabei nach mikroskopischer Auswertung mittlere Teilchengrößen von 1-10 $\mu$m erreicht.

Bevorzugt erfolgt die Herstellung von SC-Vorkonzentraten, z.B. mittels einer 0,5 l-Labor-Dynomühle unter Verwendung von 1 mm Glasperlen 5 Mahl-Passagen bei einer Vorkühlung von 15 °C mit Produktaustritt von max. 25°C (Schlauchpumpe mit 5 l/h) bis zu einer Partikelgröße von ca. 80 % < 2 $\mu$m.

Anschließend erfolgt die Abmischung mit einem Mikrokapsel-Konzentrat und weiteren Hilsmitteln. Es können herbizide Handelsprodukte auf Basis von Mikrokapselkonzentraten eingesetzt werden.

Zuletzt wird typischerweise noch ein Antischaummittel, z. B. Silicon SRE - jeweils mit ca.1,0 g/l - eingerührt, die Versuchsmuster gelagert und die Formulierungen nach Lagerung zwischen 0 und 50 °C chemisch und physikalisch

analysiert.

Bestimmungsmethoden

Die Bestimmung der Homogenität einer Formulierung wurde bestimmt nach der Richtlinie CIPAC MT 180, Methode Nr. CF/P 052.14 (CIPAC Handbook, Volume H, Seiten 310 bis 313). Es handelt sich um eine standardisierte visuelle Beurteilung von Inhomogenitäten am Boden und im oberen Bereich einer wässrigen Disperion in einer sich nach unten verjüngenden Röhre bei Raumtemperatur.

Die Bestimmung der Viskosität einer Formulierung wurde bestimmt nach der Richtlinie OECD Test Guideline 114, Methode Nr. CF/CP 027.13 (OECD Guidelines for Testing of Chemicals, # 114 "Viscosity of Liquids"). Es handelt sich um die Bestimmung der Scherkräfte in einem Kegel-Platte-Viskosimeter bei 20°C.

## Patentansprüche

1. Mischungen aus Pflanzenschutzmitteln enthaltend als Wirkstoffe eine Kombination von nicht mikroverkapseltem Metazachlor, mikroverkapseltem Dimethenamid und gegebenenfalls nicht mikroverkapseltem Quinmerac und/oder nicht mikroverkapseltem oder mikroverkapseltem Clomazone.

2. Mischungen aus Pflanzenschutzmitteln nach Anspruch 1, wobei das gesamte Metazachlor oder ein Teil des Metazachlors in der monoklinen oder in der triklinen Form vorliegt und das Dimethenamid in der racemischen Form oder als Dimethenamid-P vorliegt.

3. Mischungen aus Pflanzenschutzmitteln nach den Ansprüchen 1 oder 2, wobei mindestens zwei Wirkstoffe gemeinsam mikroverkapselt sind.

4. Formulierungen enthaltend

   A) Mischungen nach den Ansprüchen 1 bis 3 und
   B) Zusatzstoffe.

5. Verwendung von Mischungen nach den Ansprüchen 1 bis 3 zur Bekämpfung von unerwünschtem Pflanzenwuchs.

6. Verwendung von Formulierungen nach Anspruch 4 zur Bekämpfung von unerwünschtem Pflanzenwuchs.

7. Verfahren zur Herstellung der Mischungen gemäß der Ansprüche 1 bis 3 oder der Formulierungen gemäß Anspruch 4 durch Mischen der Komponenten und gegebenenfalls anschließende weitere Bearbeitung.

## Claims

1. A mixture of crop projection agents comprising, as active ingredients, a combination of non-microencapsulated metazachlor, microencapsulated dimethenamid and optionally non-microencapsulated quinmerac and/or non-microencapsulated or microencapsulated clomazone.

2. The mixture of crop projection agents according to claim 1, wherein all of the metazachlor or some of the metazachlor is in the monoclinic or triclinic form and the dimethenamid is in the racemic form or in the form of dimethenamid-P.

3. The mixture of crop protection agents according to either of claims 1 and 2, wherein at least two active ingredients are microencapsulated together.

4. A formulation comprising

   A) mixtures according to any of claims 1 to 3 and
   B) additives.

5. The use of mixtures according to any of claims 1 to 3 for controlling undesired vegetation.

6. The use of formulations according to claim 4 for controlling undesired vegetation.

7. A method for preparing the mixtures according to any of claims 1 to 3 or the formulations according to claim 4 by mixing the components followed optionally by further processing.

**Revendications**

1. Mélanges d'agents phytosanitaires, contenant comme substances actives une combinaison de métazachlore non-microencapsulé, de diméthénamide microencapsulé et éventuellement de quinmérac non-microencapsulé et/ou de clomazone microencapsulé ou non.

2. Mélanges d'agents phytosanitaires selon la revendication 1, dans lesquels la totalité du métazachlore ou une partie du métazachlore se trouve sous la forme monoclinique ou sous la forme triclinique et le diméthénamide de trouve sous la forme racémique ou sous forme de diméthénamide P.

3. Mélanges d'agents phytosanitaires selon la revendication 1 ou 2, dans desquels au moins deux substances actives sont microencapsulées ensemble.

4. Compositions contenant

   (A) des mélanges selon les revendications 1 à 3 et
   (B) des additifs.

5. Utilisation de mélanges selon les revendications 1 à 3, pour la lutte contre la croissance végétale indésirable.

6. Utilisation de compositions selon la revendication 4, pour la lutte contre la croissante végétale indésirable.

7. Procédé pour la préparation des mélanges selon les revendications 1 à 3, ou des compositions selon la revendication 4, par mélange des composants et éventuellement autre traitement subséquent.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0411408 A
- DE 4436293 A
- WO 9614743 A
- WO 0010392 A


### In der Beschreibung aufgeführte Nicht-Patentliteratur


- **K. ADAMCZEWSKI et al.** A biological evaluation of the new Command CS formulation in Poland. *Zeitschrift für Pflanzenkrankheiten und Pflanzenschutz,* 2000, 671-676
- The Pesticide Manual. British Crop Protection Council, 2000, 508, 509
- The Pesticide Manual. British Crop Protection Council, 2000, 305, 306
- The Pesticide Manual. British Crop Protection Council, 2000, 817
- The Pesticide Manual. British Crop Protection Council, 2000, 190, 191
- Preparation and Chemical Applications; The MML Series. Microspheres, Microcasules & Liposomes. Citus Books, 1999, vol. 1
- CIPAC Handbook. vol. H, 310-313